# EUROPEAN PATENT APPLICATION

(11) **EP 3 154 013 A1**
(43) Date of publication of application: **12.04.2017**
(21) Application number: 16192832.0
(22) Date of filing: 07.10.2016
(51) Int. Cl.: G06Q 20/40, H04L 29/06, G06F 21/31, G06Q 20/32, G06Q 20/10

(54) **APPARATUS, METHOD AND SYSTEM PROVIDING REMOTE USER AUTHENTICATION**

(30) Priority: 07.10.2015 US 201514877333
(71) Applicant: Sadr, Ali, Washington DC, District of Columbia 20007 (US)
(72) Inventor: Sadr, Ali, Washington DC, District of Columbia 20007 (US)
(74) Representative: Patentanwälte Lambsdorff & Lange

(57) **Abstract**

The present disclosure relates to a method, apparatus and system for providing and for performing remote authentication of a user. The apparatus may include a transceiver to establish a communication link with a remotely located device operated by a user and to receive a request from the user that requires user-authentication while communicating via the communication link, and a controller to automatically determine a user-authentication technique from among a plurality of user-authentication techniques based on the request from the user that requires user-authentication. The transceiver transmits, to the remotely located device, a command requiring that the user perform user-authentication on the remotely located device using the automatically determined user-authentication technique prior to the controller processing the written request from the user.

## Description

### BACKGROUND

### 1. Field

One or more embodiments of the present disclosure relate to providing remote user authentication, and more particularly, to an apparatus, method and system that automatically determines a user-authentication technique from among a plurality of user-authentication techniques based on a request from the user that requires user authentication.

### 2. Description of the Related Art

In conventional service providers that perform services that require user authentication, such as the banking industry, clients must enter a branch or inconvenience themselves with logistical complexities of document collection when in need of banking services that require user authentication. This results in significant user inconvenience due to the travel time and waiting time required when visiting the bank and also the time required to collect and organize relevant documents for a banking request.

### SUMMARY

One or more embodiments of the present disclosure discuss the ARX verification method, apparatus, and system.

One or more embodiments of the present disclosure provide a method for performing remote authentication of a user by automatically determining a user-authentication technique from among a plurality of user-authentication techniques based on a written request from the user that requires user authentication.

One or more embodiments of the present disclosure provide an apparatus for performing remote authentication of a user by determining a user-authentication technique from among a plurality of user-authentication techniques based on a written request from the user that requires user authentication.

One or more embodiments of the present disclosure provide a system for performing remote authentication of a user by determining a user-authentication technique from among a plurality of user-authentication techniques based on a written request from the user that requires user authentication.

Additional aspects and/or advantages will be set forth in part in the description which follows and, in part, will be apparent from the description, or may be learned by practice of the disclosure.

To achieve at least the above and/or other aspects and advantages, embodiments of the present disclosure include a remote authentication method. The method may include establishing a communication link between a local device and a remote device operated by a user, receiving a plurality of written communications sent via the established communication link, the plurality of written communications comprising a written request from the user that requires user-authentication, determining, by way of a processor, a user-authentication technique from among a plurality of predetermined user-authentication techniques based on the received written request from the user, transmitting, to the remote device, a command requiring that the remote device perform user-authentication of the user using the determined user-authentication technique prior to authorizing processing the received written request from the user, and storing, as a single file, authentication-related data. The authentication-related data may include written communications that are related to the written request, selected from among the plurality of written communications that have been sent via the established communication link, along with the received written request, and a result of the user-authentication performed using the determined user-authentication technique.

To achieve at least the above and/or other aspects and advantages, embodiments of the present disclosure include an apparatus for performing remote authentication. The apparatus may include a transceiver to establish a communication link with a remote device operated by a user and to receive a written request from the user that requires user-authentication while communicating via the communication link, and a hardware-based controller to determine a user-authentication technique from among a plurality of predetermined user-authentication techniques based on the received written request from the user. The transceiver transmits, to the remote device, a command requiring the remotely located device to perform user-authentication on the user using the determined user-authentication technique prior to the controller authorizing processing the received written request from the user.

To achieve at least the above and/or other aspects and advantages, embodiments of the present disclosure include a system for performing remote authentication. The system may include a first computing device and a second computing device. The first computing device may have a transceiver to establish a communication link with a second computing device operated by a user and to receive a written request from the user that requires user-authentication while communicating via the communication link and a hardware-based controller to determine a user-authentication technique from among a plurality of predetermined user-authentication techniques based on the received written request from the user and to control the transceiver of the first computing device to transmit a command to perform the determined user-authentication technique to the second computing device. The second computing device may have a transceiver to receive from the first computing device, the command to perform the determined at least one user-authentication technique and a controller to perform user-authentication with the second computing device using the determined user-authentication technique and to send a user-authentication result to the first computing device. The first computing device will wait until the user-authentication result has been received from the second computing device before processing or authorizing the written request from the user.

To achieve at least the above and/or other aspects and advantages, embodiments of the present disclosure include a server for performing remote authentication. The server may include a memory to store a plurality of predetermined user-authentication techniques and a hardware-based controller to receive a request from a first computing device to determine a user-authentication technique from among the plurality of predetermined user-authentication techniques based on a written request received from a user and to transmit a command to a second computing device instructing the second computing device to perform the user-authentication technique determined by the server. The controller is configured to transmit a command to the first computing device authorizing processing of the written request received from the user upon receiving a positive authentication result from the second computing device after the second computing device has completed performing the user-authentication technique determined by the server.

The ARX verification process can be used to replace the need for people to be physically present to conduct any banking transaction or to verify sensitive or confidential information being shared between parties such as callback verifications, emails, faxes or other existing communication methods.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 is a block diagram illustrating a system for providing remote user authentication, according to an embodiment of the present disclosure;
FIG. 2 illustrates screen shots from a portable electronic device for requesting banking services requiring user authentication including messages between banker and client and a confirmation screen showing that the client has been ARX Verified, according to an embodiment of the present disclosure;
FIG. 3 illustrates a method for providing remote user authentication, according to an embodiment of the present disclosure;
FIG. 4 illustrates another method of providing remote user authentication, according to an embodiment of the present disclosure;
FIG. 5 is a block diagram illustrating a system for providing remote user authentication that utilizes an independent server, according to an embodiment of the present disclosure.

### DETAILED DESCRIPTION

Reference will now be made in detail to embodiments, examples of which are illustrated in the accompanying drawings, wherein like reference numerals refer to the like elements throughout. Embodiments are described below to explain the present disclosure by referring to the figures.

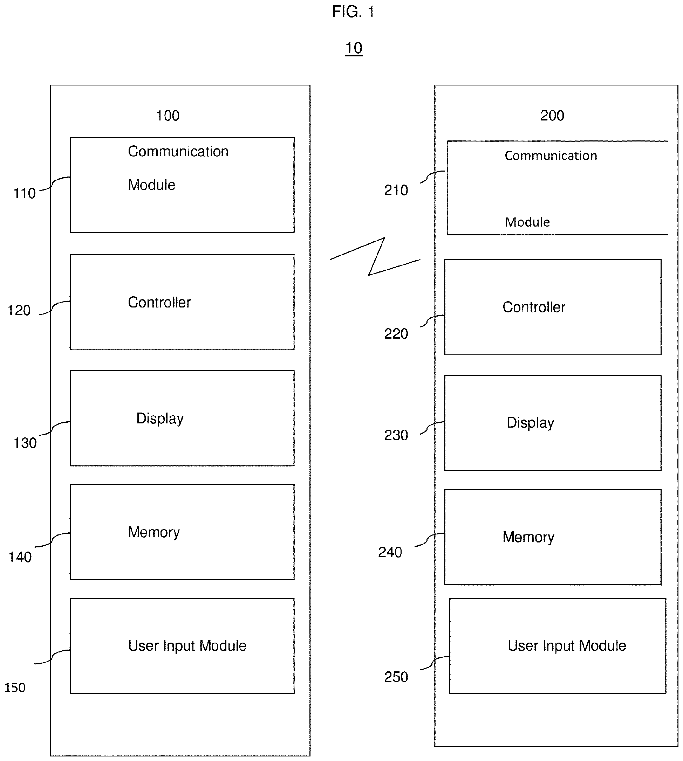

FIG. 1 is a block diagram illustrating a system for providing remote user authentication (hereinafter, ARX system 10), according to an embodiment of the present disclosure. The ARX system 10 shown in FIG. 1 may include, for example, a first computing device or apparatus 100 and a second computing device or apparatus 200. The first computing device 100 and second computing device 200 may each be a customized device or apparatus, or may be a combination of hardware and software that may be installed in an existing device such as a desktop computer, laptop a computer, a server, a mobile phone, a portable data assistant (PDA), a digital music player, or any other electronic computing device or processing apparatus. The first computing device 100 and the second computing device 200 need not be the same type of device.

The first computing device 100 may be a local device and may include, for example, a transceiver or communication module 110, a controller or processor 120, display 130, a memory 140, and a user input module 150.

The second computing device 200 may be a remote device physically separated from the local device by any arbitrary distance and may include, for example, a transceiver or communication module 210, a controller or processor 220, display 230, a memory 240, and a user input module 250.

In an embodiment, a first user such as a financial institution employee or banker may use the first computing device 100 to establish an active communication link with the second computing device operated by a second user such as a client of the financial institution or bank. Alternatively, the client may establish the communication link with the banker. More specifically, the first computing device 100 and second computing device 200 may use communication modules 110 and 210 to establish the active communication link. The phrase "active communication link" may refer to an open communication link, that is, a communication link that provides ongoing communication between the users. For example, the active communication link may take the form of an application executed by both the computing devices 100 and 200. The application may include a module that allows for real-time communications between the banker and client such as by texting, email, or live chat communications. In an embodiment, the communications including any written requests from the user may all be encrypted within the application. The active communication link may allow for the client to request specific services from the banker or may allow the banker to provide information of interest to the client. The active communication link may utilize a connection over any wired or wireless network such as the internet. The application may include a feature wherein either the banker or client may receive on their respective computing device written confirmation that the other party is actively using the communication link. For example, the chat module of the application run on the computing device 100 may provide a written prompt notifying the banker that the client is currently online. Currently online may refer to the fact that the client has the application open and has utilized the keyboard of the computing device 200 or otherwise been confirmed as actively receiving or sending written communications using the chat module within a predetermined period of time. The chat module may be a sub-module of the application or may be a stand-alone program utilized by the application.

While communicating with the banker via the active communication link, the client may submit a written request to the banker that requires user-authentication. That is, the client may use the user input module 150 of the first computing device 100 to request a banking product or service in writing. In an alternative embodiment, the client may submit an audio request to the banker that requires user-authentication. For example, the client may send a data file including an audio recording of the request by the client. The requested product or service may be one that requires authentication of the user before it can be provided or performed. For example, the client may request that the banker initiate a wire transfer from the client's bank account that exceeds a predetermined monetary threshold, thereby requiring user authentication.

The processor 120 and 220 may be a central processing unit or any other type of hardware-based processing apparatus. The processors act as controllers to coordinate the various functions of first computing device 100 and second computing device 200, respectively, and may act substantially similar to the operation of a central processing unit in a computer, for example.

The display 130 and 230 is typically a high resolution display, internal or external to the first computing device 100 and second computing device 200, respectively, although any type of electronic display may be used. The display may be a touch screen display and include an embedded array of sensors allowing a user to select one or more particular points or icons displayed on the display. The selection of a point may be accomplished using a pointing device such as a wand or stylus having a relatively sharp tip or, the point may be selected using a finger of the user, as with a touch screen display.

The memory 140 and 240 is typically embedded in the first computing device 100 and second computing device 200, respectively. The memory may be any type of memory but is typically a non-volatile memory including, for example, a magnetic hard drive, memory stick or flash memory. The memory 140 and 240 may be used to store all data required to perform the techniques and methods described herein in each respective device.

The user input module 150 and 250 accepts and processes commands from the user and allows the client and banker to enter data for communicating with other devices. For example, the client may use the user input module 150 of the first computing device 100 to request a banking product or service in writing. The user input module 150 may receive input from the user in various ways including, for example, from a keyboard, keypad, mouse, touchpad, trackball or touch-sensitive screen.

Referring to FIG. 1, according to an embodiment of the ARX system 10, the client may use the second computing device 200 to establish an active, real-time chat communications link between the banker and client. While communicating with the banker via the active communication link, the client may submit a written request to the banker that requires user-authentication.

In response, the controller 120 may automatically determine at least one user-authentication technique from among a plurality of user-authentication techniques based on the written request from the user that requires user authentication. The controller 120 may then control the transceiver 110 to transmit a command to perform the determined at least one user-authentication technique to the transceiver 210 of the second computing device 200. The plurality of user-authentication techniques may include any type of biometric authentication, knowledge-based authentication, or ownership/object authentication. For example, the plurality of user-authentication techniques may include voice recognition, facial recognition, fingerprint authentication, retinal identification, password confirmation, personal identification number (PIN), challenge response, hardware token, software token, dongle, or any other authentication technique. One or more of the user-authentication techniques may be imposed or required by the controller 120 of the first computing device 100 according to the level of security required by the bank for the user request. For example, the controller 120 may transmit a command to the second computing device 200 causing the second computing device 200 to run a sub-routine that performs the user-authentication.

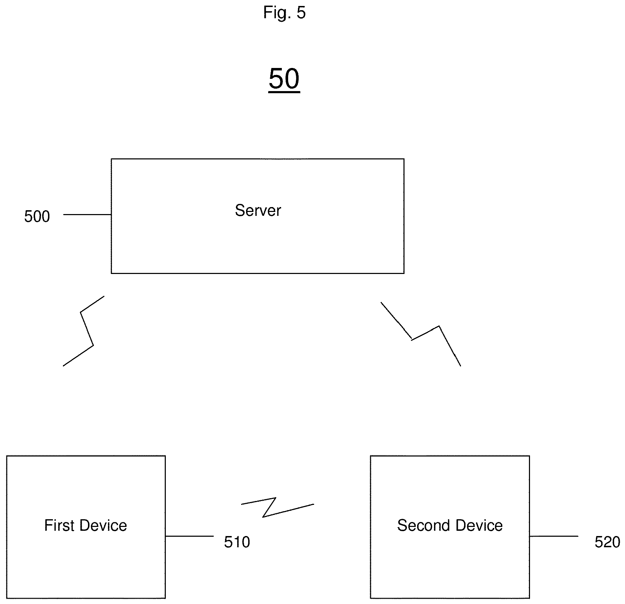

Referring to FIG. 5, in an alternative embodiment, an independent server 500 may be used to determine at least one user-authentication technique from among a plurality of user-authentication techniques. For example, in system 50, the independent server 500 may be connected via wired or wireless network to first computing device 510 and second computing device 520. The first computing device 510 may receive a written request from the user that requires user authentication via a communication module and may then forward the request to the independent server 500. The server 500 may automatically determine the at least one user-authentication technique from among a plurality of user-authentication techniques stored within the server 500 based on the written request from the user received from the first computing device 510. The server 500 may then either forward the determined at least one user-authentication technique to the communication module of the first computing device 510 or may transmit a command to the second computing device 520 instructing the second computing device 520 to perform the at least one user-authentication technique determined by the server 500. In another embodiment the server 500 may not transmit the command to the second computing device 520 until a verification is received by the server 500 from the first computing device 510 confirming that the second computing device 520 is actively communicating with the first computing device 510 via a communication link.

In another alternative embodiment, the banker may review the user service request and select at least one user-authentication technique from among a plurality of user-authentication techniques to be imposed on the user before providing the requested server. For example, the banker may review the user service request and determine that a two-tier or even a three-tier verification request must be performed by the user. In a two-tier request, the user must perform a first authentication technique such as enter a PIN and then perform a second authentication technique such as fingerprint authentication. The banker will only authorize providing the user requested service once the banker has received a confirmation from the second computing device 200 that the two-tier authorization has been successfully completed. In yet another embodiment, the banker may review the user service request and determine that a three-tier verification request must be performed by the user. In a three-tier request, the user must perform three different successive authentication techniques. There is no limit on the combination or quantity of authentication techniques that may be imposed depending on the type of user request. In addition, the controller 120 of the first computing device 100 may also automatically determine and impose a two-tier or a three-tier request according to the level of security required for the user request.

Returning to the first-described embodiment, when the controller 120 of the first computing device 100 automatically determines at least one user-authentication technique from among a plurality of user-authentication techniques based on the written request from the user that requires user authentication, the controller 120 may also generate a compliance risk profile to determine the at least one user-authentication technique. The compliance risk profile may be used to determine the degree of user authentication required before providing a particular bank service. A high compliance risk profile indicates that a high degree of user authentication is required while a low compliance risk profile indicates a low degree of user authentication is required. The controller 120 may generate a compliance risk profile for a particular requested service such as a wire transfer based on numerous factors including, for example, information about the client such as a credit history or annual income, the receiving party of the wire transfer, the geographic location of the receiving party or the bank receiving the wire transfer, the status of the bank receiving the wire transfer, the amount of the wire transfer, the currency of the wire transfer, or the timing of the wire transfer. In an alternative embodiment, the banker or other bank representative may also take any one or more of these factors into consideration when generating a compliance risk profile used by the banker to determine the degree of user authentication required before providing a particular bank service.

In another embodiment, the controller 120 may calculate or generate a compliance risk profile for a particular requested service based on one or more categories of risk including a user or client risk profile, a request risk profile, and an internal control risk profile. A client risk profile may include a summary risk assessment or score that characterizes a degree of risk related to the client, such as the client's age, credit score, nationality, account balance, account history and so on. A request risk profile may include a summary risk assessment or score that characterizes a degree of risk related to the request such as the request amount, request type, currency, timing, and so on. An internal control risk profile may include a summary risk assessment or score that characterizes a degree of institutional risk related to the transaction such as the experience of the bank official forwarding the request, the location of the institution, and so on. Thus, the controller 120 may use any one or more of the client risk profile, the request risk profile, and the internal control risk profile when generating the compliance risk profile associated with a particular requested service. The compliance risk profile may take the form of a risk score, a category of risk, a risk scale, or any other means of summarizing the relative risk associated with the particular requested service.

The transceiver 210 of the second computing device 200, upon receiving the command to perform the determined user-authentication technique may communicate the command to processor 220. The processor 220 may then perform user authentication with the second computing device 200 using the processor-determined user-authentication technique and control the transceiver 210 to send an authentication result to the first computing device 100. The first computing device 100 will only commence or authorize processing of the request from the user that requires user-authentication once a positive authentication result is received from the second computing device 200. A positive authentication result may refer to obtaining a positive confirmation of the user's identity or a confirmation that the user is the person initially registered with the bank or identified as an account owner of an account linked to the user request. Conversely, a negative authentication result refers to a failure to achieve a positive confirmation as described above.

As a more specific example, the client may use the second computing device 200 to establish an active, real-time chat communications link with the banker who operates first computing device 100. The client and banker chat via the real-time chat communications link using an application or software program commonly installed on each of the first computing device 100 and second computing device 200. For example, the same ARX application maybe installed on the first computing device 100 and the second computing device 200. In an embodiment, the ARX application may include different features, controls, and interfaces for the application version installed on the banker's first computing device 100 than on the application version installed on the client's second computing device 200. Continuing the example, initially, no requests requiring authentication are sent by the client. However, later while chatting with the communications link the client submits a written request to the banker requesting that the banker initiate a wire transfer of $3,000 from the client's bank account to an outside account. The $3,000 wire transfer exceeds a predetermined monetary threshold set by the bank, thereby requiring user authentication. Accordingly, based on the amount, the processor 120 of the first computing device 100 determines that a two-tier authentication including signature recognition and voice recognition must be performed based on the wire transfer request of $3,000. The processor 120 of the first computing device 100 then transmits a command requiring that the processor 220 control the second computing device 200 to perform the required two-tier user-authentication including signature recognition followed by voice recognition.

If, after the two-tier user-authentication process has been completed, a positive confirmation is obtained of the user's identity or if the user is confirmed as the person initially registered with the bank or identified as the account owner of an account linked to the user request, then the processor 220 controls the communication module 210 to transmit the positive authentication result to the first computing device 100. The first computing device 100 may then authorize the wire transfer request of $3,000, for example, by transmitting a message to a different department of the bank or to a different bank employee authorizing the wire transfer.

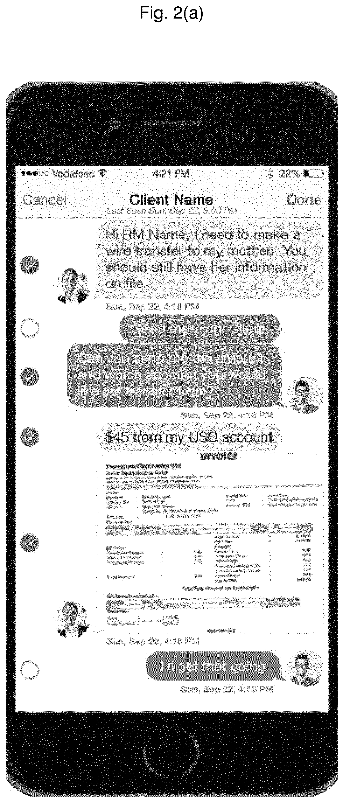

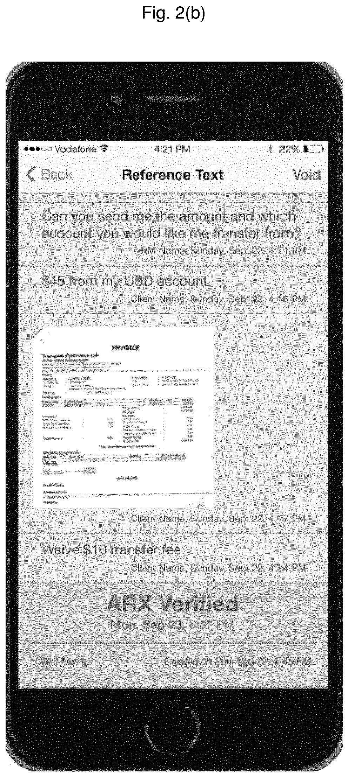

In an alternative embodiment, the positive or negative authentication result is archived along with the written request from the client that requires user-authentication and all written communications transmitted over the active communication link that are relevant to the client's request. For example, referring to FIG. 2, a screen shot at FIG. 2(a) illustrates text messages between banker and client that concern a wire transfer to client's mother. The banker subsequently determines that the wire transfer requires client authentication and therefore the banker initiates a client authentication command from first computing device 100 to second computing device 200. FIG. 2(b) illustrates a screenshot taken from display 130 showing that the client has been ARX Verified, e.g., that a positive authentication result has been obtained or that a positive authentication result has been received by the first computing device 100 from the second computing device 200. Here, the written request from the client that requires user-authentication and all of the relevant written communications, illustrated for example at FIG. 2(a) and the positive authentication result shown at FIG. 2(b) are stored or archived together, e.g., as a single file. For example, the data may be stored as a single file with the file name "WIRE TRANSFER REQUEST - ARX VERIFIED." By archiving or storing the data together, such as in a single file, a third party such as a banking official or auditor may easily pull up the client service request along with all relevant data for easy viewing. That is, the written request from the client that requires user-authentication, the positive or negative authentication result, and all written communications transmitted over the active communication link that are relevant to the client's request may be retrieved by opening a single file and easily viewed together on a single screen or on several screens, for example, in a predetermined format. In addition, any data relevant to the completion of the wire transfer may additionally be saved to the file.

In still another embodiment, the written request from the client that requires user-authentication, the positive or negative authentication result, and all written communications transmitted over the active communication link that are relevant to the client's request may be stored together and then forwarded to a third party for review. For example, the text requests from the client illustrated at FIG. 2(a) may be received by a front office bank official such as a client relations manager. Once positive confirmation has been obtained by the client relations manager, the data may be saved together and forwarded to a back office bank official for execution of the wire transfer. For example, the client relations manager may save all of the data as a single file as described above and that file may be forwarded by text or email to the back office bank official or saved in a common server accessible by each of the bank officials. The back office bank official may then open the file and have all of the data relevant to the client's wire request displayed on a single screen. The back office bank official may then easily execute the wire transfer and save the confirmation of the completed wire transfer data to the same file and forward the newly saved file by text or email to the client relations manager so that the client relations manager may easily view the additional data related to the confirmation of the completed wire transfer data in the context of the originally saved information including the client request, that is, on a same screen or within a same file as the originally saved information. Alternatively, the back office bank official may update the file on the common server. Using the updated file, the client relations manager may then contact the client to communicate that the client-requested wire transfer has been completed. Then, either the client relations manager or the back office bank official may archive all of the relevant data in a single file for easy future reference or for auditing purposes. Alternatively, the file including the written request from the client, the positive or negative authentication result, and all relevant written communications may be stored in the cloud or in a common server to which both bank officials have access.

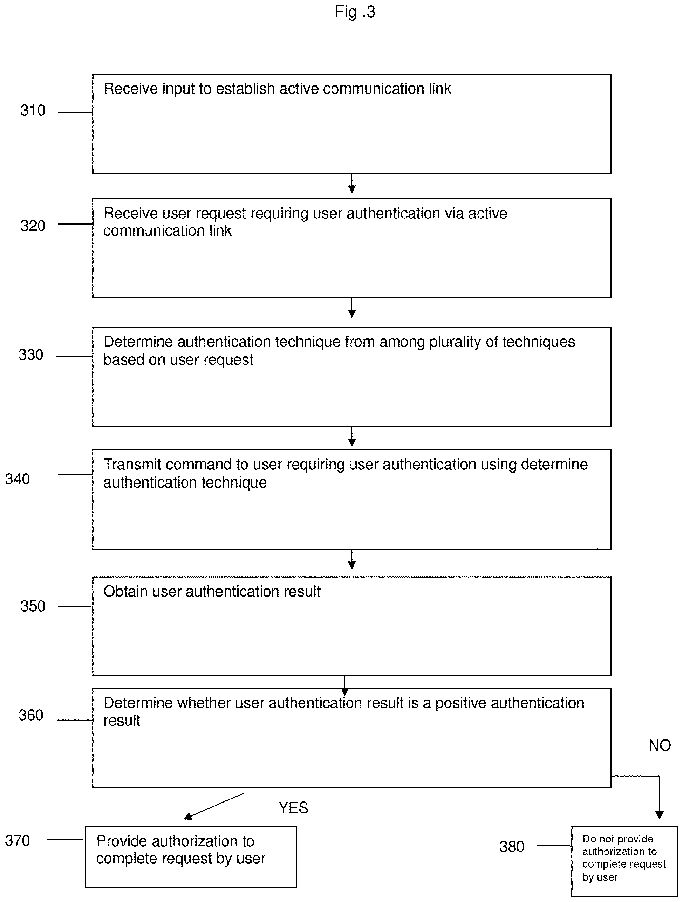

FIG. 3 illustrates a method of providing remote authentication, according to an embodiment of the present disclosure.

In operation 310, an input to establish an active or real-time communication link with a remotely located device operated by a client or user is received. The input may be received by a banker such as a client relations manager of a bank or financial institution, for example. The banker may alternatively initiate the real-time communication link with the remotely located device operated by the client. The active or real-time communication link may take the form of an application included within the computing devices operated by the banker and client that includes a module that allows for ongoing chat communications between the banker and client. The banker and client may use the communication link to exchange any and all types of information, including information related to services provided by the bank.

In operation 320, the banker may receive a written request from the user over the active communication link. The request may be a request for services that requires user-authentication. The written request includes but is not limited to transactions, instruction collections, document requests, changes to account and client data/signatories, wire transfers, loan agreements, Know Your Customer (KYC) documentary collections and verification processes, debit/credit/prepaid card services and constructs, one-on-one and group communications with private bankers, as well as back office communications and collaboration with internal bank staff.

In operation 330, at least one user-authentication technique from among a plurality of user-authentication techniques may be determined based on the written request from the user that requires user authentication. The at least one user-authentication technique may be automatically determined by a controller of a computing device or may be selected by the banker or any other bank employee. The plurality of user-authentication techniques may include voice recognition, facial recognition, fingerprint authentication, retinal identification, password confirmation, personal identification number (PIN), challenge response, hardware token, software token, or dongle. One or more of the plurality of user-authentication techniques may be imposed or required from the user according to the level of security required by the bank for the user request. The level of security required may be determined according to a generated compliance risk profile. Single-tier, two-tier, three-tier, or higher-tier user-authentications, similar to those described above, may be required according to the generated compliance risk profile.

In operation 340, a command requiring that the user perform authentication using the at least one automatically determined user-authentication technique is transmitted to the user's device. The command may only be transmitted when the real-time communication link has been confirmed as active. In another embodiment, the command may be transmitted using the real-time communication link or via another communication channel.

In operation 350, authentication using the at least one user-authentication technique is performed and an authentication result is obtained. The authentication result may be a positive authentication result or a negative authentication result. The authentication result may be provided to the controller or the banking official.

In operation 360, the authentication result is analyzed. If the authentication result is a positive authentication result the processing of the request from the user that requires user-authentication is authorized at operation 370. If the authentication result is a negative authentication result the processing of the request from the user that requires user-authentication is not performed or authorized at operation 380. In an alternative embodiment of operation 380, a second command requiring that the user perform a different authentication technique may be transmitted.

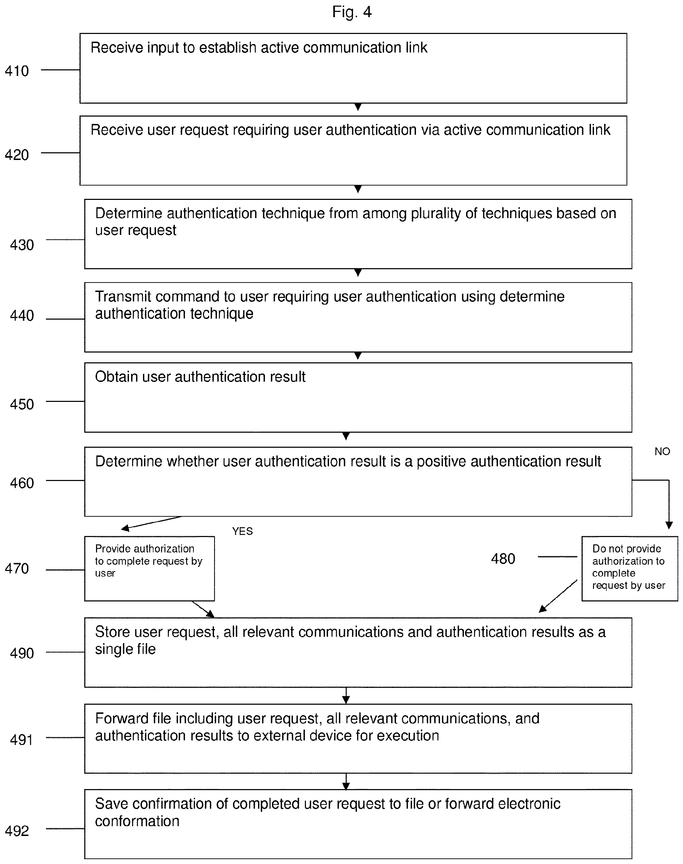

FIG. 4 illustrates another method of providing remote authentication, according to an embodiment of the present disclosure.

In operation 410, an input to establish an active or real-time communication link with a remotely located device operated by a client or user is received. The input may be received by a banker such as a client relations manager of a bank or financial institution, for example. The banker may alternatively initiate the real-time communication link with the remotely located device operated by the client. The active or real-time communication link may take the form of an application included within computing devices operated by the banker and client that includes a module that allows for ongoing chat communications between the banker and client. The banker and client may use the communication link to exchange any and all types of information, including information related to services provided by the bank.

In operation 420, the banker may receive a written request from the user over the active communication link. The request may be a request for services that requires user-authentication.

In operation 430, at least one user-authentication technique from among a plurality of user-authentication techniques may be determined based on the written request from the user that requires user authentication. The at least one user-authentication technique may be automatically determined by a controller of a computing device or may be selected by the banker or any other bank employee. The plurality of user-authentication techniques may include voice recognition, facial recognition, fingerprint authentication, retinal identification, password confirmation, personal identification number (PIN), challenge response, hardware token, software token, or dongle. One or more of the plurality of user-authentication techniques may be imposed or required from the user according to the level of security required by the bank for the user request.

In operation 440, a command requiring that the user perform authentication using the at least one automatically determined user-authentication technique is transmitted to the user. The command may be transmitted while the real-time communication link is still active. In another embodiment, the command may be transmitted using the real-time communication link or via another communication channel.

In operation 450, an authentication result is obtained. The authentication result may be a positive authentication result or a negative authentication result. The authentication result may be provided to the controller or the banking official.

In operation 460, the authentication result is analyzed. If the authentication result is a positive authentication result the processing of the request from the user that requires user-authentication is authorized at operation 470. If the authentication result is a negative authentication result the processing of the request from the user that requires user-authentication is not performed at operation 480. In an alternative embodiment of operation 380, a second command requiring that the user perform a different authentication technique may be transmitted.

In operation 490, the user request and the plurality of written communications related to the user request that have been sent and received via the real-time communication link are stored together along with a result of the authentication performed using the automatically determined user-authentication technique. All of the data stored together may be referred to as authentication-related data. For example, all of the authentication-related data may be stored as a single file having a common title or file name. The title or file name may be related to the written service request obtained from the user. By archiving or storing the authentication-related data together, such as in a single file, a third party such as a banking official or auditor may easily pull up the client service request along with all relevant data for easy viewing. The written communications related to the user request that have been sent and received via the real-time communication link may include, for example, text messages or emails between a banker and client relevant to a banking service to be performed.

In operation 491, the authentication-related data may then be forwarded to a third party for review. That is, the written request from the client that requires user-authentication, the positive or negative authentication result, and all written communications transmitted over the active communication link that are relevant to the client's request that are stored together may be forwarded to a third party for review. For example, text messages from a client may be received by a front office bank official such as a client relations manager. Once positive confirmation has been obtained by the client relations manager, the data may be saved together and forwarded to a back office bank official at a remotely located device for execution of the wire transfer. For example, all of the data may be saved as a single file as described in operation 490 and that file may be forwarded by text or email to the back office bank official. The back office bank official may then open the file and have all of the data relevant to the client's wire request displayed on a single screen. Alternatively, the file including the written request from the client, the positive or negative authentication result, and all relevant written communications may be stored in the cloud or in a common server to which the client relations manager and the back office bank official both have access.

In operation 492, confirmation of the completed service request may be saved to the same file and then the newly saved file may be forwarded by text or email. For example, the back office bank official may then easily execute the wire transfer and save the confirmation of the completed wire transfer data to the same file and forward the newly saved file by text or email to the client relations manager so that the client relations manager may easily view the additional data related to the confirmation of the completed wire transfer data in the context of the originally saved information including the client request, that is, on a same screen or within a same file as the originally saved information. Using the updated file, the client relations manager may then contact the client to communicate that the client-requested wire transfer has been completed. Then, either the client relations manager or the back office bank official may archive all of the relevant data in a single file for easy future reference or for auditing purposes.

In addition to the above described embodiments, embodiments of the present disclosure can also be implemented through computer readable code/instructions in/on a medium, e.g., a computer readable medium, to control at least one processing element to implement any above described embodiment. The medium can correspond to any medium/media permitting the storing and/or transmission of the computer readable code.

The computer readable code can be recorded/transferred on a medium in a variety of ways, with examples of the medium including recording media, such as magnetic storage media (e.g., ROM, floppy disks, hard disks, etc.) and optical recording media (e.g., CD-ROMs, or DVDs), and transmission media such as media carrying or including carrier waves, as well as elements of the Internet, for example. Thus, the medium may be such a defined and measurable structure including or carrying a signal or information, such as a device carrying a bitstream, for example, according to embodiments of the present disclosure. The media may also be a distributed network, so that the computer readable code is stored/transferred and executed in a distributed fashion. Still further, as only an example, the processing element could include a microprocessor or a computer processor, and processing elements may be distributed and/or included in a single device.

Although a few embodiments have been shown and described, it would be appreciated by those skilled in the art that changes may be made in these embodiments without departing from the principles and spirit of the disclosure, the scope of which is defined in the claims and their equivalents.

## Claims

1. A remote user-authentication method comprising:
establishing a communication link between a local device and a remote device operated by a user;
receiving a plurality of written communications sent via the established communication link, the plurality of written communications comprising a written request from the user that requires user-authentication;
determining, by way of a hardware-based processor, a user-authentication technique from among a plurality of predetermined user-authentication techniques based on the received written request from the user;
transmitting, to the remote device, a command requiring that the remote device perform user-authentication of the user using the determined user-authentication technique prior to authorizing processing the received written request from the user; and
storing, as a single file, authentication-related data comprising:
written communications that are related to the written request, selected from among the plurality of written communications that have been sent via the established communication link;
the received written request; and
a result of the user-authentication performed using the determined user-authentication technique.

2. The method of claim 1 further comprising:
transmitting the single file from the local device to a second remote device with instructions to execute the written request from the user.

3. The method of claim 1 or 2 wherein the plurality of predetermined user-authentication techniques comprises voice recognition, facial recognition, fingerprint authentication, retinal identification, password confirmation, pass phrase confirmation, personal identification number (PIN) confirmation, challenge response confirmation, hardware token, software token, ordongle.

4. The method of one of the preceding claims wherein the determining the user-authentication technique comprises determining the user-authentication technique based on a compliance risk profile calculated for the written request from the user.

5. The method of claim 4 wherein the determining the user-authentication technique further comprises determining the user-authentication technique based on a user's account information.

6. The method of one of the preceding claims wherein the determining the user-authentication technique comprises determining the user-authentication technique based on one or more of a user risk profile, a request risk profile and an internal control risk profile.

7. The method of claim 6 wherein the written request comprises one or more of a payment request, a wire transfer, a loan request, a customer service request, an information request, and an account transfer comprising a transfer between accounts.

8. The method of claim 7 wherein the compliance risk profile is determined by analyzing one or more of a credit history of the user, an annual income of the user, an identity of a receiving party of the wire transfer or account transfer, a geographic location of the receiving party or a bank receiving the wire transfer or account transfer, a status of the bank receiving the wire transfer or account transfer, an amount of the wire transfer or account transfer, a currency of the wire transfer or account transfer, or a timing of the wire transfer or account transfer.

9. The method of one of the preceding claims wherein the communication link comprises a chat mode in an application that is run on both the local device and the remote device.

10. The method of claim 9 wherein the plurality of written communications are all encrypted within the application.

11. The method of one of the preceding claims wherein when the authentication-related data is stored as a single file, the authentication-related data is displayed together in a single predetermined format within the application to facilitate analysis of the written request.

12. The method of one of the preceding claims wherein in the determining of the user-authentication technique, the processor determines that a two-tier verification request must be performed by the user, the two-tier verification request comprising a first user-authentication technique followed by a second user-authentication technique that is a biometric technique.

13. The method of one of the preceding claims wherein the hardware-based processor is installed within at least one of the local device and an independent server configured to communicate with the local device.

14. An apparatus for performing remote authentication, the apparatus comprising:
a transceiver to establish a communication link with a remote device operated by a user and to receive a written request from the user that requires user-authentication while communicating via the communication link; and
a hardware-based controller to determine a user-authentication technique from among a plurality of predetermined user-authentication techniques based on the received written request from the user;
wherein the transceiver transmits, to the remote device, a command instructing the remotely located device to perform user-authentication on the user using the determined user-authentication technique prior to the controller authorizing processing of the received written request from the user.

15. The apparatus of claim 14 wherein the controller stores, as a single file, written communications that are related to the written request, selected from among the plurality of written communications that have been sent via the communication link, along with the received written request, and a result of the user-authentication performed using the determined user-authentication technique.

16. The apparatus of claim 15 wherein the transceiver transmits the single file from the local device to a second remote device with instructions to execute the written request from the user.

17. A system for performing authentication between a first computing device and a second computing device, the system comprising:
a first computing device comprising:
a transceiver to establish a communication link with a second computing device operated by a user and to receive a written request from the user that requires user-authentication while communicating via the communication link; and
a hardware-based controller to determine a user-authentication technique from among a plurality of predetermined user-authentication techniques based on the received written request from the user and to control the transceiver of the first computing device to transmit a command to perform the determined user-authentication technique to the second computing device;
the second computing device comprising:
a transceiver to receive from the first computing device, the command to perform the determined at least one user-authentication technique; and
a controller to perform user-authentication with the second computing device using the determined user-authentication technique and to send a user-authentication result to the first computing device,
wherein the first computing device will wait until the user-authentication result has been received from the second computing device before processing or authorizing the written request from the user.

18. The system of claim 17 wherein the communication link is a chat mode included within an application run on both the first computing device and on the second computing device.

19. The system of claim 18 wherein the hardware-based controller is configured to determine the user-authentication technique when the user is determined by the first computing device to be actively communicating with the second computing device via the communication link.

20. A server comprising:
a memory to store a plurality of predetermined user-authentication techniques;
a hardware-based controller to receive a request from a first computing device to determine a user-authentication technique from among the plurality of predetermined user-authentication techniques based on a written request received from a user and to transmit a command to a second computing device instructing the second computing device to perform the user-authentication technique determined by the server,
wherein the controller is configured to transmit a command to the first computing device authorizing processing of the written request received from the user upon receiving a positive authentication result from the second computing device after the second computing device has completed performing the user-authentication technique determined by the server.
